# EUROPEAN PATENT SPECIFICATION

(11) **EP 3 060 896 B1**
(45) Date of publication and mention of the grant of the patent: **13.03.2019**
(21) Application number: 14863651.7
(22) Date of filing: 21.10.2014
(51) Int. Cl.: G01M 3/08

(54) **METHOD AND SYSTEM FOR DETECTION OF BLOWOUT IN PIPES/TUBES**
VERFAHREN UND SYSTEM ZUR ERKENNUNG VON LECKAGEN IN ROHRLEITUNGEN/ROHREN
PROCÉDÉ ET SYSTÈME DE DÉTECTION D'ÉCLATEMENTS DANS DES TUYAUX/TUBES

(30) Priority: 24.10.2013 IN 3333MU2013
(43) Date of publication of application: 31.08.2016
(73) Proprietor: Jain Irrigation Systems Limited, Jalgaon, Maharashtra 425001 (IN)
(72) Inventor: DEFRANK, Michael Patrick, Madera, CA 93638 (US); JAIN AJIT BHAVARLAL, Jalgaon Maharashtra 425001 (IN)
(74) Representative: Pons
(86) International application number: PCT/IN2014/000669
(87) International publication number: WO 2015/075737

(56) References cited:
- WO-A1-2012/160121
- WO-A1-2012/160121
- US-A- 4 854 158
- US-A- 5 054 311
- US-A1- 2006 202 381

## Description

### TECHNICAL FIELD

The present subject matter described herein, in general, relates to blowout in pipes or tubes, and more particularly to detection of blowout in pipes or tubes.

### BACKGROUND

Blowouts are holes in the pipes/tubes generally caused by foreign material in the extrudate creating a weak or open area during the period of stretching and pulling as the extrudate enters the vacuum tank water bath before the material cools off.

Blowouts can be small micro perforations or huge holes that will actually server the pipes/tubes and stop the production line. The large holes that shut down the line are easy to detect, they are right at the tube break off point. The micro perforations are more difficult to find as they will simply run through the line undetected. The customer will find them when he finishes the irrigation project and turns the water on. Many blowouts detected at that time often manifest either as a geyser or a flooded pool. If the pipes/tubes are buried, as is often the case it is a long job digging in the mud to locate and repair every place where a blowout occurred. Since there is seldom a single occurrence of a blowout, the field could be littered with them, creating a tremendous amount of work for the customer, and a warranty nightmare for the manufacturer.

Document WO2012160121 discloses a system for manufacturing an irrigation pipe and a device and method for detecting holes in the wall of an irrigation pipe, according to the preamble of claim 1.

The subject-matter of the invention is directed to a method of detecting a blowout in an irrigation pipe according to claims 1 to 4.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1, illustrates a flow diagram for detecting a blowout in an irrigation pipe in accordance with an aspect of the present disclosure.
Figure 2, illustrates a blowout detector in accordance with an aspect of the present disclosure.

### DETAILED DESCRIPTION

The present subject matter discloses a method for detecting blowouts or fault during the manufacturing of the pipes/tubes.

The method of detection of blowout implies the differential between the positive air pressure inside the pipes/tubes and the negative pressure of the vacuum tank (206). When the tank (206) is filled with cooling liquid (204), the positive air pressure inside the pipes/tubes will push through the defect and create bubbles as it travels the length of the vacuum tank (206). The apparatus captures a stream of these bubbles as the tube travels under it and feeds (funnels) them to a central area where they are allowed to break the surface of the cooling liquid. (204) The bubbles break the surface inside a small diameter tube and are transported by the tube along with a quantity of the cooling liquid (204) to a point where they can be detected by a sensor (208). The output signal can be set to sound an alarm, stop production or any other manner of alerting.

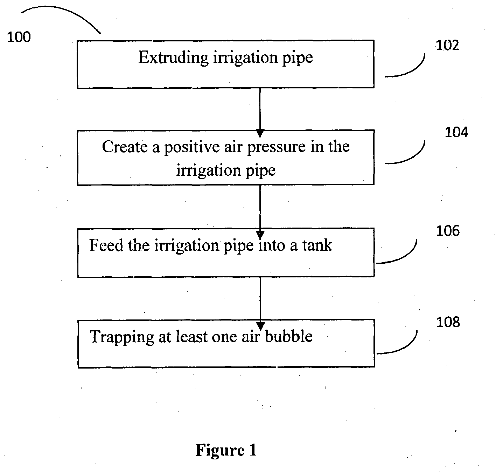

Figure 1, illustrates a flow diagram (100) for detecting a blowout in an irrigation pipe in accordance with an aspect of the present disclosure. The flow diagram 100 comprises step 102, wherein the irrigation pipe is extruded from a material like Polyvinyl chloride (PVC). At step 104, a positive air pressure is created in the irrigation pipe by pumping air through the irrigation pipe. Further at the step 106 the irrigation piper with the positive air pressure is fed into a tank (206). The tank (206) comprises a cooling liquid (204), wherein the tank (206) is completely filled with the cooling liquid (204). The complete filling of tank (206) with the cooling liquid (204) creates a negative pressure in the tank (206), due to absence of air. As the irrigation pipe is fed to the tank (206), at step 108 any bubbles or at least one bubble escaping from the irrigation pipe is trapped at a surface of the tank (206). The at least one bubble may be originated from a blowout in the irrigation pipe, as the irrigation pipe has positive air pressure and the tank (206) has negative air pressure. The at least one air bubble trapped on the surface of the tank (206) may be further transferred to a sensor (208) through a pipe or can be directly sensed at the surface. According to an exemplary embodiment a piezoelectric sensor may be used or an ultrasonic sensor may be used. Further upon detection of the at least one air bubble an alert may be sent to a user or an operator.

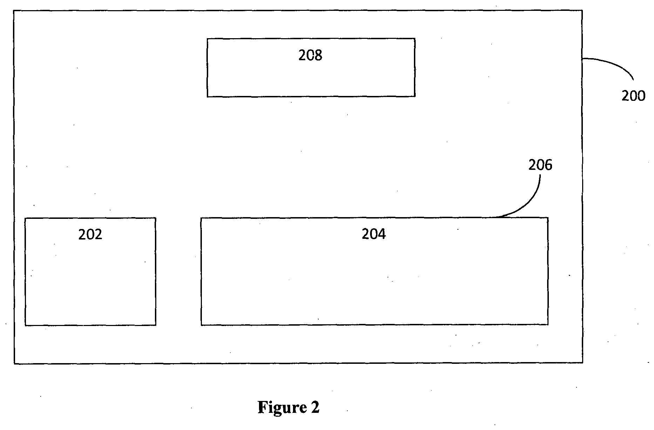

Figure 2, illustrates a blowout detector in accordance with an aspect of the present disclosure. The system 200, for detecting a blowout may comprise an extrusion machine 202. The extrusion machine (202) may be configured to extrude pipes for irrigation. Any conventional machine (202) may be used for this purpose. The extruded irrigation pipe may further be fed into a tank 206. The tank 206 may be filled with a coolant liquid 204. The system (200) may further comprise a sensor 208. The sensor 208, may be configured to detect to any air bubble passing or traveling through the coolant liquid (204) to surface of the tank (206). The sensor (208) may then be enabled to alert a user or an operator of the system.

## Claims

1. Method for detecting a blowout in an irrigation pipe, the method comprising:
extruding (102) the irrigation pipe;
creating (104) a positive air pressure in the irrigation pipe, wherein the positive air pressure is created by circulating air through the irrigation pipe; and
feeding (106) the irrigation pipe, with the positive air pressure, into a tank (206), **characterized in that** the tank (206) is completely filled with a coolant liquid (204), so that a negative pressure is created in the tank for releasing at least one air bubble;
the method further comprising a step of trapping (108) at least one air bubble at a surface of the tank (206).

2. Method for detecting a blowout in an irrigation pipe, according to claim 1, further comprising transferring the at least one air bubble from the surface to a sensor (208) for sensing the at least one bubble at the surface of the tank (206).

3. Method for detecting a blowout in an irrigation pipe, according to claim 2, wherein the sensor (208) is selected between an ultrasonic sensor or a piezoelectric sensor.

4. Method for detecting a blowout in an irrigation pipe, according to claim 2, further comprising alerting a user upon detection of at least one air bubble in the irrigation pipe.

## Patentansprüche

1. Verfahren zur Erkennung einer Leckage in einer Bewässerungsleitung, wobei das Verfahren folgendes umfasst:
Extrudieren (102) der Bewässerungsleitung;
Erzeugen (104) eines positiven Luftdrucks in der Bewässerungsleitung, wobei der positive Luftdruck durch Luftzirkulation durch die Bewässerungsleitung erzeugt wird; und
Zuführen (106) der Bewässerungsleitung, mit dem positiven Luftdruck, in einen Tank (206), **dadurch gekennzeichnet, dass**
der Tank (206) vollständig mit einer Kühlmittelflüssigkeit (204) gefüllt ist, so dass in dem Tank ein Unterdruck zum Freisetzen mindestens einer Luftblase erzeugt wird;
wobei das Verfahren ferner einen Schritt des Einfangens (108) mindestens einer Luftblase an einer Oberfläche des Tanks (206) umfasst.

2. Verfahren zur Erkennung einer Leckage in einer Bewässerungsleitung nach Anspruch 1, ferner umfassend das Übertragen der mindestens einen Luftblase von der Oberfläche auf einen Sensor (208) zum Erfassen der mindestens einen Blase an der Oberfläche des Tanks (206).

3. Verfahren zur Erkennung einer Leckage in einer Bewässerungsleitung nach Anspruch 2, wobei der Sensor (208) zwischen einem Ultraschallsensor oder einem piezoelektrischen Sensor ausgewählt wird.

4. Verfahren zur Erkennung einer Leckage in einer Bewässerungsleitung nach Anspruch 2, ferner umfassend das Warnen eines Benutzers beim Erkennen mindestens einer Luftblase in der Bewässerungsleitung.

## Revendications

1. Procédé pour la détection d'un éclatement dans un tuyau d'irrigation, le procédé comprenant :
l'extrusion (102) du tuyau d'irrigation ;
la création (104) d'une pression d'air positive dans le tuyau d'irrigation, dans lequel la pression d'air positive est créée en faisant circuler l'air par le tuyau d'irrigation ; et
l'alimentation (106) du tuyau d'irrigation, avec la pression d'air positive, dans un réservoir (206), **caractérisé en ce que**
le réservoir (206) est complètement rempli d'un liquide réfrigérant (204), de sorte qu'une pression négative est créée dans le réservoir pour libérer au moins une bulle d'air ;
le procédé comprenant en outre une étape consistant à emprisonner (108) au moins une bulle d'air à une surface du réservoir (206).

2. Procédé pour la détection d'un éclatement dans un tuyau d'irrigation, selon la revendication 1, comprenant en outre le transfert de la au moins une bulle d'air de la surface à un capteur (208) pour capter au moins une bulle à la surface du réservoir (206).

3. Procédé pour la détection d'un éclatement dans un tuyau d'irrigation, selon la revendication 2, dans lequel le capteur (208) est choisi entre un capteur ultrasonique ou un capteur piézoélectrique.

4. Procédé pour la détection d'un éclatement dans un tuyau d'irrigation, selon la revendication 2, comprenant en outre l'alerte à un utilisateur de la détection d'au moins une bulle d'air dans le tuyau d'irrigation.
